# EUROPÄISCHE PATENTANMELDUNG

(11) **EP 1 801 040 A1**
(43) Veröffentlichungstag der Anmeldung: **27.06.2007**
(21) Anmeldenummer: 06006511.7
(22) Anmeldetag: 29.03.2006
(51) Int. Cl.: B65G 13/00, B65G 15/00, B65G 37/00

(54) **Gebindeabgabesystem**

(30) Priorität: 21.12.2005 DE 102005061696
(71) Anmelder: STAAKE Investment & Consulting GmbH & Co. KG, 38118 Braunschweig (DE)
(72) Erfinder: Staake, Alexandra, 38126 Braunschweig (DE)
(74) Vertreter: Stornebel, Kai

(57) **Zusammenfassung**

Die Erfindung betrifft ein Gebindeabgabesystem mit auf mehreren Ebenen und nebeneinander angeordneten Bereitstellungsbahnen (4), an deren Enden verfahrbar angetriebene Bestückungs- und Entnahmevorrichtungen (20, 30) angeordnet sind, die mit einer Steuereinrichtung verbunden sind und in die Bereitstellungsbahnen (4) Gebinde (40) aus einer Übernahmestation (5) einstellen und aus den Bereitstellungsbahnen (4) Gebinde (40) auf Anforderung entnehmen und einer Ausgabestelle (8) zuführen. An der Entnahmevorrichtung (20) ist zumindest ein Antrieb (21) für die antriebslosen Bereitstellungsbahnen (4) angeordnet, der mit der jeweils von der Entnahmevorrichtung (20) angefahrenen Bereitstellungsbahn koppelbar ist und die Bereitstellungsbahn (4) dergestalt antreibt, dass zumindest ein Gebinde (40) auf die Entnahmevorrichtung (20) geladen wird.

## Beschreibung

Die Erfindung betrifft ein Gebindeabgabesystem mit auf mehreren Ebenen und nebeneinander angeordneten Bereitstellungsbahnen, an deren Enden verfahrbar angetriebene Bestückungs- und Entnahmevorrichtungen angeordnet sind, die mit einer Steuereinrichtung verbunden sind und in die Bereitstellungsbahnen Gebinde aus einer Übernahmestation einstellen und aus den Bereitstellungsbahnen Gebinde auf Anforderung entnehmen und einer Ausgabestelle zuführen. Unter Gebinden sind neben einer Zusammenstellung mehrerer Einzelverpackungen wie flachen Schachteln, Tüten, Flaschenschachteln oder dergleichen, auch größere Einzelwaren wie Waschpulvererpackungen, Reinigungsmittel, Kartons, Dosen, Kanister oder dergleichen verstanden. Ebenfalls werden unter dem Begriff Gebinde Großpackungen, Waren einer bestimmten Größe und insbesondere Getränkeverpackungen, wie Getränkekisten oder Paletten mit Dosen oder Einwegflaschen sowie folienverschweißte Waren oder Warenzusammenstellungen verstanden. Grundsätzlich können auch andere Warengrößen mit dem vorhandenen System gehandhabt werden.

Aus der EP 590 646 B1 ist ein Getränketerminal zur automatischen Ausgabe von Getränkekästen bekannt, bei dem an einem Lieferterminal mit Getränkekästen beladene Paletten angeliefert werden. Diese Paletten werden in einem Hochregallager eingestellt und über ein Hochregal-Fahrzeug, das zur Bevorratung der Paletten in dem Hochregal dient, transportiert. Eine Vereinzelungseinrichtung nimmt die jeweiligen Getränkekästen von den Paletten und führt sie einem Verkaufslager zu, in welchem die einzelnen Getränkekästen bevorratet werden. Weiterhin ist eine Kundenkonsole vorgesehen, an der eine Getränkeausgabestelle vorhanden ist. Über eine zumindest eine Kunden-Fördereinrichtung zur Entnahme der Kästen aus dem Verkaufslager werden die Kästen an die Getränkeausgabestelle übergeben. Weiterhin ist der Kundenkonsole eine Leergutannahmestelle zugeordnet, in der das Leergut abgegeben werden kann. Mittels einer Kundenfördereinrichtung wird ein Leergutspeicher mit dem Leergut beschickt. Dem Leergutspeicher nachgeordnet ist eine Palettiereinrichtung, auf der die einzelnen Leergutkästen auf einer Palette angeordnet werden. Die Palettiereinrichtung ist mit dem Hochregal-Fahrzeug betriebsverbunden, so dass die vollen Leergutpaletten in das Hochregal eingestellt werden können.

Die EP 669 603 B1 betrifft ebenfalls ein Getränketerminal zur automatischen Ausgabe von Getränkekästen, wobei der Getränketerminal zumindest einen Lieferterminal für die Anlieferung von mit Getränkekästen beladenen Paletten, ein Palettenlager und ein Lagerfahrzeug für die Bevorratung von Paletten in dem Palettenlager sowie ein Verkaufslager zur Bevorratung der einzelnen Getränkekästen aufweist. Eine Getränkeausgabestelle ist vorgesehen, die mit einer Kundenkonsole versehen ist. Ein Kastentransportmittel dient zur Entnahme der Kästen aus dem Verkaufslager und zur Übergabe der Kästen an die Getränkeausgabestelle. Eine Vereinzelungseinrichtung zum Vereinzeln der Getränke ist vorgesehen, wobei das Verkaufslager für jede Getränkesorte zumindest ein angetriebenes Fördergerät aufweist. Das Fördergerät soll als Staurollenförderer ausgebildet sein, so dass in dem Verkaufslager für jede Getränkesorte ein eigener Antrieb vorhanden sein muss. Bei einem entsprechend gro-βen Getränketerminal muss eine Vielzahl von angetriebenen Rollen in den jeweiligen Rollenbahnen vorhanden sein. Dies ist sehr kostenintensiv.

Aus der EP 727 078 B1 ist ein Getränketerminal zur automatischen Ausgabe von Getränkekästen mit einem Lieferterminal für mit Getränkekästen beladene Paletten, zumindest einem Hochregal, einer Vereinzelungseinrichtung, einer Bepalettierungseinrichtung, zumindest einem Verkaufslager, zumindest einer Kundenfördereinrichtung, zumindest einer in einer Kundenkonsole versehenden Getränkeausgabestelle und einer Vereinzelungseinrichtung bekannt, wobei die Vereinzelungseinrichtung und die Bepalettierungseinrichtung zumindest einen horizontal angeordneten Linearförderer umfassen, welcher eine Lagerfläche des Verkaufslagers zugeordnet ist und mit Greifmitteln zum Greifen und Heben/Senken von einzelnen Getränkekästen versehen ist. Es soll ein Getränketerminal zur automatischen Ausgabe von Getränkekisten bereitgestellt werden, bei dem eine vollautomatische Betriebsweise ohne jegliches Personal dem Kunden bei betriebssicherer und schnellerer Arbeitsweise eine Vielzahl von Getränkesorten angeboten werden können.

Bei allen Getränketerminals gemäß dem Stand der Technik sind Vorrichtungen zum Vereinzeln von auf Paletten angelieferten Getränken notwendig. Ebenfalls sind die jeweiligen Rollenbahnen in den Verkaufslagern angetrieben, so dass eine Vielzahl aufwendiger Antriebe und Steuerungen vorgesehen sein muss. Teilweise werden die Paletten mit vollen Getränkekästen innerhalb des Getränkelagers verfahren, um die Paletten einem Greifersystem zugänglich zu machen.

Aufgabe der vorliegenden Erfindung ist es, ein Gebindausgabesystem bereitzustellen, das bei höherer Effizienz preiswerter und zuverlässiger arbeitet.

Erfindungsgemäß wird diese Aufgabe durch ein Getränkeabgabesystem mit den Merkmalen des Anspruchs 1 gelöst Vorteilhafte Ausgestaltungen der Erfindung sind in den Unteransprüchen aufgeführt.

Das erfindungsgemäße Gebindeabgabesystem mit auf mehreren Ebenen und nebeneinander angeordneten Bereitstellungsbahnen, an deren Enden verfahrbar angetriebene Bestückungs- und Entnahmevorrichtungen angeordnet sind, die mit einer Steuereinrichtung verbunden sind und in die Bereitstellungsbahnen Gebinde aus einer Übernahmestation einstellen und aus den Bereitstellungsbahnen Gebinde auf Anforderung entnehmen und einer Ausgabestelle zuführen, sieht vor, dass an der Entnahmevorrichtung zumindest ein Antrieb für die antriebslosen Bereitstellungsbahnen angeordnet ist, der mit der jeweils von der Entnahmevorrichtung angefahrenen Bereitstellungsbahn koppelbar ist und die Bereitstellungsbahn dergestalt antreibt, dass zumindest ein Gebinde auf die Entnahmevorrichtung geladen wird. Statt der bisher vorgeschlagenen Lösungen über transportierte Getränkekästenpaletten oder einzeln angetriebenen Rollenbahnen mit Staurollenförderern ist erfindungsgemäß vorgesehen, dass lediglich die verfahrbaren Entnahmevorrichtungen, sofern mehrere davon in dem Gebindeabgabesystem vorgesehen sind, mit der aufwendigen und teuren Antriebs- und Steuerungstechnik versehen sind. Diese Entnahmevorrichtungen können an die jeweils ausgewählte Bereitstellungsbahn angefahren oder angedockt werden, in denen bereits vereinzelt die Gebinde, z. B. die Getränkekästen oder dergleichen, lagern. Bei Bedarf werden dann die Bereitstellungsbahnen dergestalt über die Entnahmevorrichtungen angetrieben, dass das jeweilige Gebinde von der Bereitstellungsbahn auf die Entnahmevorrichtung geladen wird. Die Entnahmevorrichtung kann dann zu einer Ausgabestelle verfahren werden bzw. das entnommene Gebinde einer Ausgabestelle zuleiten. Durch die antriebslose Gestaltung der Bereitstellungsbahnen ist es möglich, eine robuste Technik einzusetzen mit entsprechend zuverlässigen Motoren in den Entnahmevorrichtungen. Der Verzicht auf die Ausstattung der einzelnen Bereitstellungsbahnen mit individuellen Antrieben und ggf. individueller Sensorik erleichtert die Wartung und reduziert die Investitionskosten.

Eine Weiterbildung der Erfindung sieht vor, dass ebenfalls die Bestückungsvorrichtungen mit zumindest einem Antrieb versehen sind, der die Gebinde von der Bestückungsvorrichtung auf die jeweils angefahrene Bereitstellungsbahn bewegt. Die Bestückungsvorrichtung entnimmt aus einer Übernahmestation die einzelnen Gebinde, wobei bevorzugt mehrere Gebinde auf der Bestückungsvorrichtung und auf der Entnahmevorrichtung transportiert werden können, und führt diese den jeweiligen Bereitstellungsbahnen zu. Dadurch wird gewährleistet, dass Einzelgebinde hintereinander in den Bereitstellungsbahnen vorhanden sind.

Der Antrieb in den Bestückungsvorrichtungen und Entnahmevorrichtungen ist als ein Reibradantrieb in einer möglichen Ausgestaltungsform der Erfindung ausgebildet. Ein. Elektromotor sorgt für den Antrieb eines Reibrades, das mit einem korrespondierenden Reibrad an der Bestückungsvorrichtung gekoppelt ist. Wird der Motor über die Steuerungseinrichtung aktiviert, dreht sich das Reibrad und überträgt das Drehmoment auf das korrespondierende Reibrad der Bereitstellungsbahn. Der Antrieb bleibt solange eingeschaltet, bis das Gebinde auf der Entnahmevorrichtung vollständig aufgenommen wurde bzw. bis das Gebinde in die Bereitstellungsbahn vollständig eingeführt wurde. Dabei kann auf der Entnahmevorrichtung und der Bestückungsvorrichtung jeweils eine Rollenbahn vorgesehen sein, die angetriebene Rollen aufweist, so dass auch auf der Entnahme- und Bestückungsvorrichtung ein Transport der Gebinde möglich ist.

Eine Variante der Erfindung sieht vor, dass zwei unabhängig voneinander ansteuerbare Antriebe an den Bestückungs- und Entnahmevorrichtungen vorgesehen sind. Während der eine Antrieb an einer Seite der Bereitstellungsbahn ankoppelt und nur das vorne stehende Gebinde bewegt wird, kann der auf der gegenüberliegenden Seite angeordnete Antrieb dahinter liegende Rollen antreiben, so dass die hintereinander angeordneten Gebinde an das Ausgabeende der Bereitstellungsbahnen gefördert werden. Analog gilt dies für die Bestückungsvorrichtungen, die Gebinde in die Bereitstellungsbahnen hineinschieben.

Jede Bereitstellungsbahn ist an ihren Enden, insbesondere an ihrem Entnahmeende, mit zumindest einem Sperrelement versehen, das im angekoppelten Zustand von der Entnahmevorrichtung außer Funktion bringbar ist, beispielsweise durch eine mechanische Außerkraftsetzung einer Schwerkraftfalle oder durch ein Sensorelement, das bei einem Kontakt oder einer ausreichend nahen Annäherung einen Antrieb aktiviert.

Die Bestückungs- und Entnahmevorrichtungen können jeweils mit einer zentralen Steuereinrichtung gekoppelt sein, die sowohl die Entnahmemenge als auch die Anzahl der zu entnehmenden Gebinde erfasst. Anhand der in der jeweiligen Bereitstellungsbahn vorhandenen Gebindeanzahl wird errechnet, ob und in welcher Menge von der Bestückungsvorrichtung Gebinde in die jeweilige Bereitstellungsbahn eingestellt werden muss. Eine mögliche Grenze zur Wiederauffüllung der Bereitstellungsbahn liegt bei 50 % Entnahme.

Eine Weiterbildung der Erfindung sieht vor, dass die Entnahmevorrichtung mit einer Ausgabestelle über eine Transporteinrichtung gekoppelt ist, die beispielsweise als eine Gefällebahn ausgestaltet sein kann. So ist es beispielsweise vorgesehen, dass mehrere Gebinde auf der Entnahmevorrichtung gelagert werden können, bis diese der jeweiligen Transporteinrichtung zugeführt werden. Bei einer Bestellung an einem Kundenterminal oder per Internet kann die gewünschte Gebindeanzahl vorkommissioniert und der jeweiligen Transporteinrichtung zugeführt werden. Über die Transporteinrichtung wird dann das Gebinde bzw. werden die Gebinde der Abgabestelle zugeführt, an der eine Entnahmeöffnung ausgebildet ist, die bevorzugt durch ein verfahrbares Verschlussschwert verschlossen ist. Nach der Bestellung und dem Bezahlen, beispielsweise über eine Kreditkarte, öffnet sich das Verschlussschwert und der Kunde kann die Gebinde entnehmen.

Eine Weiterbildung der Erfindung sieht vor, dass für ein einfaches Verladen der Gebinde der Entnahmeöffnung eine verfahrbare Verladehilfe zugeordnet ist, auf der das ausgegebene Gebinde entlangführbar ist. Diese Verladehilfe kann eine Rutsche oder ebenfalls eine Rollenbahn sein, auf der die Gebinde von der Entnahmeöffnung weg in Richtung auf ein Fahrzeug entlang geführt werden können. Die Verladehilfe ist bevorzugt motorisch angetrieben, um ein Vorfahren mit einem Pkw zu erleichtern. Sofern sich der Pkw nicht in dem Verfahrweg der Verladehilfe befindet, was über Sensoren detektierbar ist, wird die Verladehilfe ausgefahren, so dass das Gebinde bis in unmittelbare Nähe des Kofferraumes geleitet werden kann, ohne dass die mitunter schweren Gebinde getragen werden müssen. Die Verladehilfe ist bevorzugt händisch ausziehbar und motorisch einziehbar ausgestaltet.

Zur verbesserten Anpassung an die jeweiligen Transportmittel und Kunden ist die Verladehilfe endseitig höheneinstellbar, so dass das Niveau der Verladehilfe an die Ladekante des Transportmittels anpassbar ist.

Um das Getränkegebindeabgabesystem beladen zu können, ist eine Übernahmestation mit Rollenbahnen vorgesehen, die an eine Ankopplungsstation mit Rollenbahnen koppelbar sind, die in Belieferungsfahrzeugen angeordnet sind. Lieferfahrzeuge werden an einem Lieferterminal angedockt und so ausgerichtet, dass die innen befindlichen Rollenbahnen zu den in der Übernahmestation vorhandenen Rollenbahnen fluchten. An den Rollenbahnen in der Übernahmestation sind Antriebe vorgesehen, die mit den Rollenbahnen in den Belieferungsfahrzeugen koppelbar sind. Die Gebinde werden dann bevorzugt auf allen Rollenbahnen gleichzeitig von den Belieferungsfahrzeugen in das Gebindeabgabesystem eingeschleust, wobei das Steuerungssystem über Datenaustausch weiß, wo in welcher Rollenbahn der Übernahmestation welches Gebinde vorhanden ist. In den Belieferungsfahrzeugen sind somit kompatibele Bereitstellungsbahnen vorhanden, von denen die Gebinde in das Gebindeabgabesystem einschleusbar sind. Von den Rollenbahnen der Übernahmestation werden die jeweiligen Gebinde von den Bestückungsvorrichtungen auf die Bereitstellungsbahnen verteilt, sofern ausreichend Raum dafür vorhanden ist.

Um einen Lkw möglichst schnell entladen zu können, sind die Rollenbahnen in der Übernahmestation so ausgebildet, dass sämtliche Gebinde der Belieferungsfahrzeuge vollständig aufgenommen werden können, bevorzugt entsprechen die Längen der Rollenbahnen in den Belieferungsfahrzeugen den Längen der Rollenbahn in der Übernahmestation.

Um für ein Rückgabesystem, beispielsweise das Pfandsystem, gerüstet zu sein, sieht dass Gebindeabgabesystem eine Annahmeeinrichtung für Rückgabegebinde vor, von der aus die Gebinde mit einer Transporteinrichtung über die Entnahmevorrichtung in eine Abgabestation eingestellt werden. Die Abgabestation weist analog zu der Übernahmestation Rollenbahnen mit Antrieben auf, die mit Rollenbahnen in Entsorgungsfahrzeugen koppelbar sind. Die Entsorgungsfahrzeuge sind bevorzugt leere Belieferungsfahrzeuge mit darin angeordneten Rollenbahnen, in die die Leergebinde vollständig einführbar sind.

Nachfolgend wird ein Ausführungsbeispiel der Erfindung anhand der beigefügten Figuren näher erläutert. Es zeigen:
- Figur 1 -: eine Gesamtansicht eines Gebindeabgabesystems;
- Figur 2 -: eine Schnittdarstellung durch ein Gebindeabgabesystem;
- Figur 3 -: eine vergrößerte Darstellung der Schnittdarstellung gemäß Figur 2;
- Figur 4 -: eine Detaildarstellung einer Abgabestation; sowie
- Figur 5 -: zwei Ansichten einer Bereitstellungsbahn mit einer Entnahmevorrichtung.

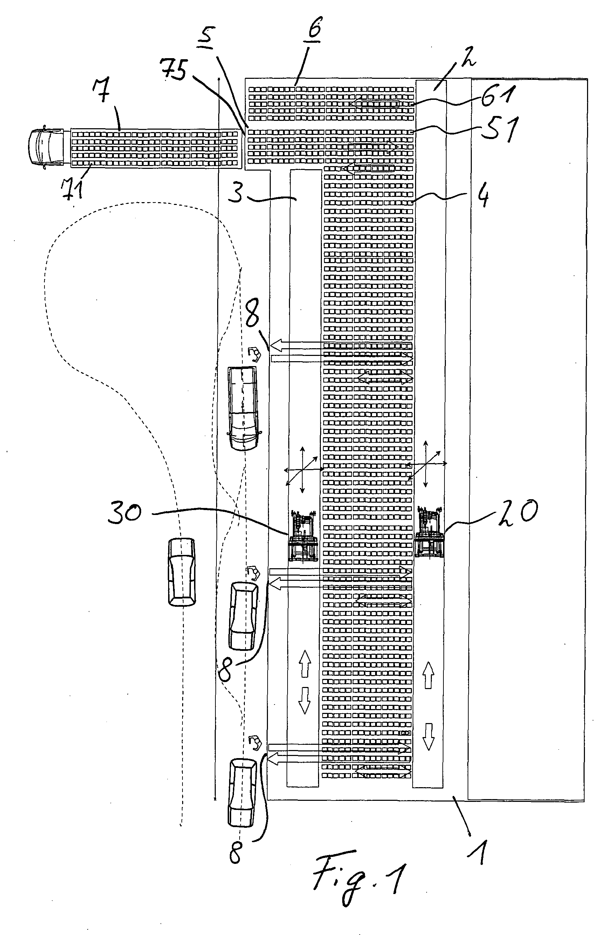

Figur 1 zeigt ein Gebindeabgabesystem mit einem Gebäude, in dem auf Verfahrbahnen 2, 3 eine Entnahmevorrichtung 20 und eine Bestückungsvorrichtung 30 verfahrbar angeordnet sind. Die Entnahme- und Bestückungsvorrichtung 20, 30 sind in drei Richtungen verfahrbar und können somit entlang von nebeneinander und übereinander angeordneten Bereitstellungsbahnen 4 verfahren werden. Die jeweiligen Bereitstellungsbahnen 4 können selektiv von der Entnahmevorrichtung 20 und der Bestückungsvorrichtung 30 angefahren werden. Ebenfalls sind in dem Gebäude Ausgabestellen 8 ausgebildet, an denen Kunden bevorzugt mit Kraftfahrzeugen parken können, um die bestellten und den Ausgabestellen 8 zugeführten Gebinde aus einer nicht dargestellten Entnahmeöffnung 38 entnehmen zu können. Bis auf die Entnahmeöffnung 38 ist das Gebäude 1 im Normalbetrieb verschlossen. Eine Bestellung kann entweder über das Internet oder an der Ausgabestelle 8 an einem entsprechenden Terminal abgegeben werden.

Zur Beschickung des Gebindeabgabesystems fahren Belieferungsfahrzeuge 7, vorliegend Lastkraftwagen, an eine Ankoppelungsstation 75 an, wobei sowohl in dem Belieferungsfahrzeug 7 als auch in der Übernahmestation 5 Rollbahnen 71, 51 vorgesehen sind, auf denen die Gebinde einstellbar sind. Die Rollbahnen 51 der Übernahmestation 5 weisen Antriebe auf und befördern gleichzeitig die Gebinde von den Rollbahnen 71 aus dem Belieferungsfahrzeug 7 in die Übernahmestation 5. Dadurch ist es möglich, in kürzester Zeit sämtliche Gebinde des Belieferungsfahrzeuges 7 in das Gebindeabgabesystem einzuschleusen. Dazu sind die Rollbahnen 51 der Übernahmestation 5 so ausgebildet, dass ein voll beladenes Belieferungsfahrzeug 7 vollständig entleerbar ist.

Neben der Übernahmestation 5 ist eine Entsorgungsstation 6 mit Rollbahnen 61 vorgesehen, in die zurückgegebene Gebinde oder Leergut einstellbar sind. Die Entsorgung erfolgt umgekehrt zu der Bestückung der Übernahmestation 5, indem die vollen Rollbahnen 61 der Entsorgungsstation 6 zu den leeren Rollbahnen 71 der in diesem Falle Entsorgungsfahrzeuge 7 ausgerichtet werden. Die Gebinde werden dann über die Antriebe der Rollenbahnen 61 in die Rollenbahnen 71 des Fahrzeuges 7 eingestellt.

Die Ankoppelungsstation 75 sowohl zum Beschicken als auch zum Entsorgen ist durch Tore, insbesondere Rolltore, verschlossen.

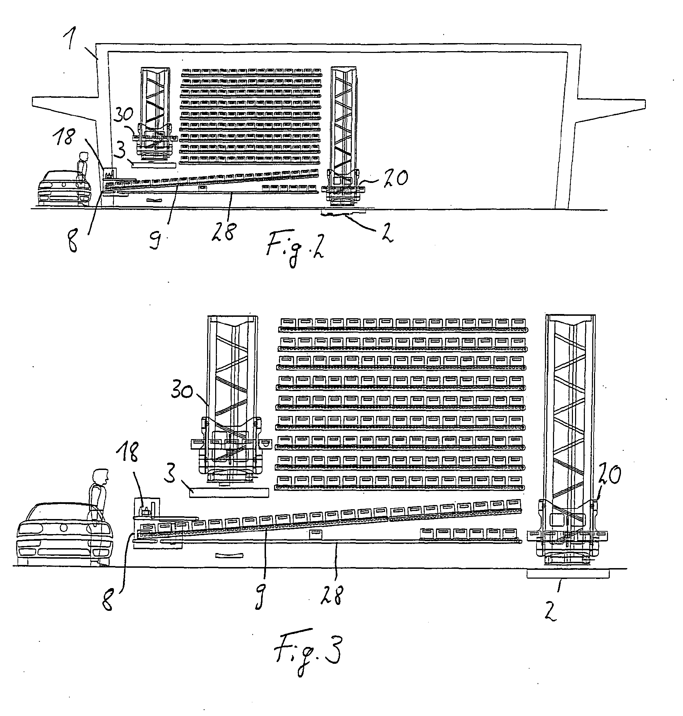

Zur Entnahme eines Gebindes wird die Entnahmevorrichtung 20 entlang der Verfahrbahnen 2 zu der gewünschten Bereitstellungsbahn 4 verfahren. Nach Kopplung der Entnahmevorrichtung 20 mit der jeweiligen Bereitstellungsbahn 4 wird ein Gebinde auf die Entnahmevorrichtung 20 aufgeladen und anschließend eine weitere Bereitstellungsbahn 4 angefahren, in der gegebenenfalls das weitere gewünschte Gebinde gelagert ist. Nach Beendigung der Zusammenstellung der Gebinde verfährt die Entnahmevorrichtung 20 bis zu einer Transporteinrichtung 9, wie sie in den Figuren 2 und 3 dargestellt ist. In der dargestellten Ausführungsform ist die Transporteinrichtung 9 als eine Gefällebahn ausgebildet, die zu einer Ausgabestelle 8 führt. Von der Entnahmevorrichtung 20 werden die jeweils umgestellten Gebinde auf die Transporteinrichtung 9 geschleust, mit der sie zu der Ausgabestelle 8 gefahren werden. Alternativ zu der Gefällebahn 9 kann, die Transporteinrichtung auch als ein herkömmliches Förderband oder ein Staurollenförderer ausgebildet sein. Bei einer anderen Ausgestaltung kann die Ausgabe direkt über die Entnahmevorrichtung 20 erfolgen, die bis zu der Ausgabestelle 8 verfährt.

In den Figuren 2 und 3 ist ebenfalls eine Annahmeeinrichtung 18 für Rückgebinde, beispielsweise Pfandflaschen oder leere Getränkekästen vorgesehen, die dann über ein Förderband 28 zu der Entnahmevorrichtung 20 zurückgefördert werden. Von der Entnahmevorrichtung können dann die zurückgegebenen Gebinde oder leeren Kästen, wie in der Figur angedeutet, zu der Entsorgungsstation 6 verfahren und dort in die Rollbahnen 61 eingestellt werden.

Ebenfalls ist es möglich, vorkommissionierte Bestellungen bereitzuhalten und bei Anforderung durch den Kunden umgehend an die Abgabestelle 8 zu verfahren.

In den Figuren 1 bis 3 sind die Abgabestellen 8 nur an einer Seite des Gebäudes 1 eingezeichnet, grundsätzlich können diese Abgabestellen 8 auch auf der anderen Seite des Gebäudes vorhanden sein. Ebenfalls können die Bereitstellungsbahnen 4 beiderseits der Verfahrbahn 2 der Entnahmevorrichtung 20 angeordnet sein. Alternativ kann die Bestückungsvorrichtung 30 mittig zwischen den Bereitstellungsbahnen angeordnet sein, während die Entnahmevorrichtung 20 ausgabeseitig angeordnet ist.

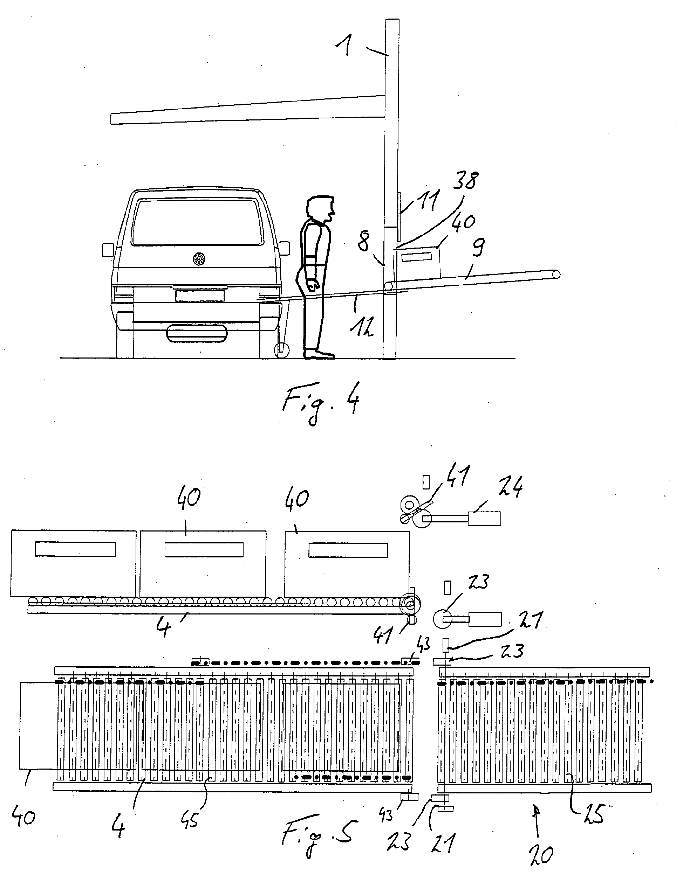

In der Figur 4 ist ein möglicher Entnahmevorgang eines Gebindes 40, vorliegend einer Getränkekiste, gezeigt. Nach Anforderung durch einen Kunden wird von der Entnahmevorrichtung 20 das entsprechende Gebinde 40 aus der Bereitstellungsbahn 4 entnommen und über die Transporteinrichtung 9 bis zur Ausgabestelle 8 gefördert. Die Ausgabestelle 8 weist eine Entnahmeöffnung 38 auf, die durch ein Verschlussschwert 11 verschlossen ist, das sich erst nach Bezahlen bzw. Eingabe eines entsprechenden Bestellcodes öffnet. Gleichzeitig oder im Vorfeld vor der Öffnung der Entnahmeöffnung 38 verfährt eine Verladehilfe 12 als eine Verlängerung der Transporteinrichtung 9 in Richtung auf das Fahrzeug, so dass das Gebinde auf der Verladehilfe 12 entlang gerollt, gerutscht oder gezogen werden kann. Der Nutzer muss dann das Gebinde nicht von der Entnahmeöffnung 38 bis zu dem Kofferraum oder Transportmittel tragen, vielmehr erfolgt lediglich ein kurzes Umsetzen von der Verladehilfe 12 bis in das Transportmittel. Die Verladehilfe 12 kann höhenverstellbar ausgebildet sein, um sich an die Ladehöhe anpassen zu können.

Um eine Kollision mit dem Kunden bzw. Fahrzeugen zu vermeiden, wird im Vorfeld des Ausfahrens der Verladehilfe 12 über Sensoren geprüft, ob der Verfahrweg frei von Hindernissen ist. Bei einer händisch ausziehbaren Variante wird beim Einziehen überprüft, ob sich keine Hindernisse in dem Verfahrweg befinden.

In der Figur 5 ist im Detail eine Anordnung und Ausgestaltung der Bereitstellungsbahnen 4 und der Entnahmevorrichtung 20 gezeigt. Sowohl die Bereitstellungsbahn 4 als auch die Entnahmevorrichtung 20 weist Rollen 25, 45 auf. An der Entnahmevorrichtung 20 sind Antriebe 21 vorgesehen, die unabhängig voneinander Reibräder 23 antreiben können. Die Reibräder 23 sind korrespondierend zueinander ausgerichtet, wenn die Rollenbahnen der nicht selbständig angetriebenen Bereitstellungsbahn 4 und der Entnahmevorrichtung 20 zueinander fluchten. Wird zunächst der untere Antrieb 21 der Entnahmevorrichtung 20 in Betrieb gesetzt, drehen nur die vorderen Rollen 45 der Bereitstellungsbahn 4, wie dies durch die untere Strichpunktlinie angedeutet ist. Dadurch wird nur das vordere Gebinde 40 in Richtung auf die Entnahmevorrichtung 20 bewegt. Gleichzeitig werden die Rollen 25 auf der Entnahmevorrichtung 20 angetrieben, so dass das Gebinde 40 auf die Entnahmevorrichtung aufgefahren werden kann. Sollen weitere Gebinde 40 auf die Entnahmevorrichtung 20 geladen werden, wird der obere Antrieb 21 aktiviert, was zu einer Drehung des oberen Reibrades 23 führt. Dadurch werden die weiter hinter liegenden Rollen 45, wie durch die oberen Strichpunktlinien gezeigt, angetrieben, was zu einem Nachschieben der Gebinde in Richtung auf das Rollenbahnende führt. Durch eine entsprechende Steuerung können die Gebinde 40 vereinzelt werden, so dass ein Abstand zwischen dem vorderen Gebinde und den dahinter liegenden vorrätigen Gebinden besteht. Bevorzugt wird durch den oberen Antrieb 21 die vordere Hälfte der jeweiligen Rollenbahn 4 angetrieben.

Wie in der oberen Darstellung der Figur 5 zu erkennen ist, sind zur Sperrung eines unbeabsichtigten Hinausgleitens der Gebinde 40 Sperrelemente 41 vorgesehen, die durch Aktuatoren 24 so verschwenkt werden können, dass eine Sperrung aufgehoben wird. Die Aktuatoren können Teil der Reibradantriebe sein oder separat ausgestaltet sein.

Das erfindungsgemäße Gebindeabgabesystem kann vollständig ohne Personal betrieben werden. Die Anlieferung kommissionierter Waren in Einzelgebinden erfolgt über Lkw. Die Übergabe in das Gebindeabgabesystem erfolgt mit einer definierten Zuordnung, an welcher Stelle der jeweiligen Rollenbahnen sich welches Gebinde befindet. Über eine entsprechende Zentralsteuerung kann der jeweilige Bedarf an den gewünschten bzw. bereits verbrauchten Gebinden ermittelt werden. Es können Vollgebinde gekauft und gegebenenfalls Leergebinde zurückgegeben werden. Eine Abrechung erfolgt über Kunden- oder Kreditkarten oder per Barzahlung an einem Automaten. Eine Bestellung kann an einem am Gebäude 1 angeordneten Panel, über das Internet oder in einem angeschlossenen Einkaufszentrum erfolgen.

Gleichzeitig wird das Leergut erfasst und in der Entsorgungsstation 6 in den richtigen Rollenbahnen 61 gespeichert. In dem Steuersystem sind auch die Daten erfasst, wo welches Leergutgebinde befindlich ist.

Die Bestückungs- und Entnahmevorrichtungen, auch Regelbediengeräte genannt, sind höhenverfahrbar und in Längs und Querrichtung verfahrbar, so dass grundsätzlich sämtliche Regalbahnen von den Regalbediengeräten 20. 30 angefahren werden können. Die Rollenbahnen können an das jeweils einzustellende Gebinde angepasst sein. Alternativ zu einer automatischen Verfahrbewegung der Verladehilfe kann diese auch manuell herausgezogen werden. Durch die Anordnung der Antriebe in den Regalbediengeräten 20, 30 verringert sich der Wartungsaufwand und der Installationsaufwand. Reparaturen können schneller durchgeführt werden, da in den antriebslosen Rollenbahnen 4 nahezu keine Wartung notwendig ist. Aufgrund der geringen Technizität innerhalb der Rollenbahnen können diese enger übereinander und nebeneinander gebaut werden, was die Raumausnutzung optimiert.

Sowohl das Beladen als auch Entladen der Belieferungs- bzw. Entsorgungsfahrzeuge 7 kann automatisch erfolgen, es müssen keine Paletten vereinzelt oder gehandhabt werden. Aufwendige Greifer oder Handhabungsgeräte sind nicht notwendig.

## Patentansprüche

1. Gebindeabgabesystem mit auf mehreren Ebenen und nebeneinander angeordneten Bereitstellungsbahnen, an deren Enden verfahrbar angetriebene Bestückungs- und Entnahmevorrichtungen angeordnet sind, die mit einer Steuereinrichtung verbunden sind und in die Bereitstellungsbahnen Gebinde aus einer Übernahmestation einstellen und aus den Bereitstellungsbahnen Gebinde auf Anforderung entnehmen und einer Ausgabestelle zuführen, **dadurch gekennzeichnet, dass** an der Entnahmevorrichtung (20) zumindest ein Antrieb (21) für die antriebslosen Bereitstellungsbahnen (4) angeordnet ist, der mit der jeweils von der Entnahmevorrichtung (20) angefahrenen Bereitstellungsbahn (4) koppelbar ist und die Bereitstellungsbahn (4) dergestalt antreibt, dass zumindest ein Gebinde (40) auf die Entnahmevorrichtung (20) geladen wird.

2. Gebindeabgabesystem nach Anspruch 1, **dadurch gekennzeichnet, dass** an der Bestückungsvorrichtung (30) zumindest ein Antrieb vorgesehen ist, der die Gebinde (40) von der Bestückungsvorrichtung (30) auf die jeweils angefahrene Bereitstellungsbahn (4) bewegt.

3. Gebindeabgabesystem nach Anspruch 1 oder 2, **dadurch gekennzeichnet, dass** der Antrieb (21) als ein Reibradantrieb ausgebildet ist.

4. Gebindeabgabesystem nach einem der voranstehenden Ansprüche, **dadurch gekennzeichnet, dass** jede Bereitstellungsbahn (4) zumindest ein Sperrelement (41) aufweist, das im angekoppelten Zustand von der Entnahmevorrichtung (20) außer Funktion bringbar ist.

5. Gebindeabgabesystem nach einem der voranstehenden Ansprüche, **dadurch gekennzeichnet, dass** die Bereitstellungsbahnen (4) als Rollbahnen ausgebildet sind.

6. Gebindeabgabesystem nach einem der voranstehenden Ansprüche, **dadurch gekennzeichnet, dass** auf der Entnahmevorrichtung (20) angetriebene Lagerrollen (25) angeordnet sind.

7. Gebindeabgabesystem nach einem der voranstehenden Ansprüche, **dadurch gekennzeichnet, dass** die Bestückungs- und Entnahmevorrichtungen (20, 30) jeweils mit einer Steuereinrichtung gekoppelt sind.

8. Gebindeabgabesystem nach einem der voranstehenden Ansprüche, **dadurch gekennzeichnet, dass** die Belade- und Entnahmevorrichtungen (20, 30) zur Aufnahme mehrerer Gebinde (40) eingerichtet sind.

9. Gebindeabgabesystem nach einem der voranstehenden Ansprüche, **dadurch gekennzeichnet, dass** die Entnahmevorrichtung (20) mit einer Ausgabestelle (8) über eine Transporteinrichtung (9) gekoppelt ist.

10. Gebindeabgabesystem nach Anspruch 9, **dadurch gekennzeichnet, dass** die Transporteinrichtung (9) eine Gefällebahn ist.

11. Gebindeabgabesystem nach Anspruch 9 oder 10, **dadurch gekennzeichnet, dass** die Abgabestelle (8) an eine Entnahmeöffnung (38) mündet, die durch ein verfahrbares Verschlussschwert (11) verschlossen ist.

12. Gebindeabgabesystem nach Anspruch 11, **dadurch gekennzeichnet, dass** der Entnahmeöffnung (8) eine verfahrbare Verladehilfe (12) zugeordnet ist, auf der das ausgegebene Gebinde (40) entlangführbar ist.

13. Gebindeabgabesystem nach Anspruch 12, **dadurch gekennzeichnet, dass** die Verladehilfe (12) motorisch angetrieben ist und mit einer Steuereinheit gekoppelt ist, die mit Sensoren gekoppelt ist, die ein Hindernis auf dem Verfahrweg der Verladehilfe (12) detektieren.

14. Gebindeabgabesystem nach Anspruch 12 oder 13, **dadurch gekennzeichnet, dass** die Verladehilfe (12) höheneinstellbar ausgebildet ist.

15. Gebindeabgabesystem nach einem der voranstehenden Ansprüche, **dadurch gekennzeichnet, dass** die Übernahmestation (5) Rollbahnen (51) aufweist, die an einer Ankopplungsstation (75) mit Rollbahnen (71) koppelbar sind, die in Belieferungsfahrzeugen (7) angeordnet sind.

16. Gebindeabgabesystem nach Anspruch 15, **dadurch gekennzeichnet, dass** die Rollbahnen (51) in der Übernahmestation (5) Antriebe aufweisen, die mit den Rollbahnen (71) in den Belieferungsfahrzeugen (7) koppelbar sind und Gebinde (40) von den Belieferungsfahrzeugen (7) in die Übernahmestation (5) transportieren.

17. Gebindeabgabesystem nach Anspruch 15 oder 16, **dadurch gekennzeichnet, dass** die Rollbahnen (51) der Übernahmestation (5) die Gebinde (40) der Belieferungsfahrzeuge (7) vollständig aufnehmen können.

18. Gebindeabgabesystem nach einem der voranstehenden Ansprüche, **dadurch gekennzeichnet, dass** eine Annahmeeinrichtung (18) für Rückgabegebinde vorgesehen ist, von der aus die Gebinde mit einer Transporteinrichtung (28) über die Entnahmevorrichtung (20) in eine Entsorgungsstation (6) eingestellt werden.

19. Gebindeabgabesystem nach Anspruch 18, **dadurch gekennzeichnet, dass** die Entsorgungsstation (6) Rollbahnen (61) mit Antrieben aufweisen, die mit den Rollbahnen in Entsorgungsfahrzeugen koppelbar sind und Gebinde (40) von der Entsorgungsstation (6) in die Entsorgungsfahrzeuge transportieren.

20. Gebindeabgabesystem nach Anspruch 19, **dadurch gekennzeichnet, dass** die Rollbahnen der Entsorgungsfahrzeuge die Gebinde (40) in den Rollbahnen der Abgabestation vollständig aufnehmen können.
